# EUROPEAN PATENT APPLICATION

(11) **EP 4 847 975 A1**
(43) Date of publication of application: **02.12.2026**
(21) Application number: 25179872.4
(22) Date of filing: 30.05.2025
(51) Int. Cl.: G02B 6/02, C03B 37/025, G01N 21/952

(54) **CHARACTERIZATION OF HOLLOW CORE FIBER MICROSTRUCTURE**

(71) Applicant: Microsoft Technology Licensing, LLC, Redmond, WA 98052 (US)
(72) Inventor: SANDOGHCHI, Seyed Reza, Redmond, 98052-6399 (US); MALTESE, Giorgio, Redmond, 98052-6399 (US); CHRIS-MBA, Dumebi Junior Clinton, Redmond, 98052-6399 (US); BAKHTIARI GORAJOOBI, Shahab, Redmond, 98052-6399 (US); MOCSAI, Bence Ferenc, Redmond, 98052-6399 (US); WILLIAMS, Matthew Ian Ronald, Redmond, 98052-6399 (US)
(74) Representative: CMS Cameron McKenna Nabarro Olswang LLP

(57) **Abstract**

A method and a system for monitoring the internal structure of an antiresonant hollow core fiber, HCF. The method comprises: positioning at least one light source and at least one optical microscope on opposing sides of a longitudinal section of an antiresonant HCF at a plurality of angles around a circumference of the antiresonant HCF, illuminating the antiresonant HCF using the at least one light source, detecting a plurality of micrographs at the plurality of angles using the at least one optical microscope, constructing a sinogram from the plurality of micrographs using computed tomography and determining the dimensions of the internal structure of the antiresonant HCF using a repeating pattern in the direction of a first axis of the sinogram.

## Description

### BACKGROUND

Hollow Core Fibers are a new class of optical fibers. In contrast to traditional solid core fibers, light is guided in a hollow central core rather than solid glass. Hollow core fibers provide numerous benefits compared to solid core fibers such as reduced optical propagation loss, increased signal propagation speed, wider optical transmission bandwidth and reduced nonlinear optical effects. Hollow core fibers can also withstand higher damage thresholds compared to solid core fibers.

Optical fibers are utilized for high-capacity data transmission over long distances and are becoming increasingly important as consumers and businesses become reliant on network services and cloud storage and computing resources. The key advantages provided by hollow core fibers compared to solid core fibers, as highlighted above, make them a better candidate for various application in the field of data transmission.

A key challenge associated with manufacturing hollow core fibers is accurately monitoring the internal microstructure of the hollow core fiber. This challenging is made greater due to the increasingly complex internal geometry of microstructured hollow core fibers.

The embodiments described below are not limited to implementations which solve any of all of the disadvantages of known methods of monitoring the internal microstructure of hollow core fiber.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

Described herein is a method for monitoring the internal structure of an antiresonant hollow core fiber, HCF. The method comprises: positioning at least one light source and at least one optical microscope on opposing sides of a longitudinal section of an antiresonant HCF at a plurality of angles around a circumference of the antiresonant HCF, wherein the antiresonant HCF comprises an outer tubular cladding and an internal structure comprising a plurality of tubular capillaries extending longitudinally along the length of the HCF which are attached to the inner surface of the tubular cladding, wherein the plurality of tubular capillaries define a hollow core extending longitudinally along the center of the length of the HCF. The method further comprises illuminating the antiresonant HCF using the at least one light source and detecting a plurality of micrographs at the plurality of angles using the at least one optical microscope, wherein each micrograph comprises a striped pattern caused by light transmitted through the antiresonant HCF from the light source. The method further comprises constructing a sinogram from the plurality of micrographs using computed tomography, wherein the sinogram comprises a first axis defined by the angle around the circumference of the antiresonant HCF and a second axis defined by a cross-sectional distance defined by the antiresonant HCF, wherein the sinogram comprises a repeating pattern in the direction of the first axis. The method further comprises determining the dimensions of the internal structure of the antiresonant HCF using the repeating pattern in the direction of the first axis of the sinogram.

Described herein is also a system for monitoring the internal structure of an antiresonant hollow core fiber, HCF, wherein the antiresonant HCF comprises an outer tubular cladding and an internal structure comprising a plurality of tubular capillaries extending longitudinally along the length of the HCF which are attached to the inner surface of the tubular cladding, wherein the plurality of tubular capillaries define a hollow core extending longitudinally along the center of the length of the HCF, the system comprising: at least one light source and at least one optical microscope, wherein the at least one light source and the at least one optical microscope are positioned on opposing sides of the antiresonant HCF, and wherein the at least one light source and the at least one optical microscope are positionable at a plurality of angles around a circumference of the antiresonant HCF. The system also comprises a microstructure measuring system connected to the at least one light source and the at least one optical microscope. The microstructure measuring system configured to: illuminate the antiresonant HCF using the at least one light source, detect a plurality of micrographs at the plurality of angles using the at least one optical microscope, wherein each micrograph comprises a striped pattern caused by light transmitted through the antiresonant HCF from the light source, construct a sinogram from the plurality of micrographs using computed tomography, wherein the sinogram comprises a first axis defined by the angle around the circumference of the antiresonant HCF and a second axis defined by a cross-sectional distance defined by the antiresonant HCF, wherein the sinogram comprises a repeating pattern in the direction of the first axis, and determining the dimensions of the internal structure of the antiresonant HCF using the repeating pattern of the sinogram.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A shows a schematic of a side view of an antiresonant hollow core fiber, HCF;
FIG. 1B shows a schematic transverse cross-sectional view of an antiresonant hollow core fiber;
FIG. 1C shows a schematic transverse cross-sectional view of a nested nodeless antiresonant hollow core fiber, NANF;
FIG. 1D shows a schematic transverse cross-sectional view of a double nested nodeless antiresonant hollow core fiber, DNANF;
FIG. 1E shows a schematic transverse cross-sectional view of a triple nested nodeless antiresonant hollow core fiber, TNANF;
FIG. 2 shows a schematic diagram representing the generation of a micrograph of an antiresonant HCF using a light source;
FIG. 3 shows a micrograph and intensity profile detected from light transmitted through an antiresonant HCF;
FIG. 4 shows a schematic diagram representing the generation of a sinogram from an antiresonant HCF;
FIG. 5A shows a sinogram annotated with the measurement of an outer diameter of an outer tubular cladding of an antiresonant HCF;
FIG. 5B shows a schematic transverse cross-sectional view of a nested nodeless antiresonant hollow core fiber, NANF, annotated with an outer diameter of an outer tubular cladding;
FIG. 6A shows a sinogram annotated with the measurement of an inner diameter of an outer tubular cladding of an antiresonant HCF;
FIG. 6B shows a schematic transverse cross-sectional view of a nested nodeless antiresonant hollow core fiber, NANF, annotated with an inner diameter of an outer tubular cladding;
FIG. 7A shows a sinogram annotated with the measurement of a diameter of a hollow core of an antiresonant HCF;
FIG. 7B shows a schematic transverse cross-sectional view of a nested nodeless antiresonant hollow core fiber, NANF, annotated with a diameter of a hollow core;
FIG. 8A shows a sinogram annotated with the measurement of a spacing between tubular capillaries arranged on an inner surface of an outer tubular cladding;
FIG. 8B shows a schematic transverse cross-sectional view of a nested nodeless antiresonant hollow core fiber, NANF, annotated with a distance between tubular capillaries arranged on an inner surface of an outer tubular cladding;
FIG. 9 shows additional steps for processing a sinogram to determine spacing between tubular capillaries.
FIG. 10A shows a sinogram for a nested nodeless antiresonant hollow core fiber with touching tubular capillaries arranged on an inner surface of an outer tubular cladding;
FIG. 10B shows a schematic transverse cross-sectional view of a nested nodeless antiresonant hollow core fiber, NANF, with touching tubular capillaries.
FIG. 11 shows a method flow for determining the dimensions of the internal structure of an antiresonant HCF.
FIG. 12 shows a schematic diagram of a TOSMiCT configuration comprising a plurality of optical microscopes and light sources;
FIG. 13 shows a schematic diagram of a multilayer TOSMiCT configuration;
FIG. 14 shows a schematic diagram of a rotational TOSMiCT configuration;
FIG. 15 shows a schematic diagram of an interferometric device in use with a DNANF;
FIG. 16A shows a spectrum measured using the interferometric device corresponding to diameters of cladding capillaries nested in the DNANF;
FIG. 16B shows a schematic diagram of the different diameters of tubular capillaries within a DNANF; and
FIG. 17 shows a drawing tower modified with a TOSMiCT configuration and an interferometric device.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

In hollow core optical fibers, light is guided through a longitudinal hollow central core, rather than in solid glass as is the case for solid core fibers. Typically, a hollow core fiber includes a central hole surrounded by a plurality of peripheral channels extending longitudinally along the fiber length. The term "longitudinally" in the context of optical fibers is defined as the length of the fiber or along the direction light propagates through the fiber. As will be explained later, the plurality of peripheral channels may be located in various geometry arrangements and have very high longitudinal consistency. Compared to solid core fibers, hollow core fibers provide potential benefits such as reduced loss from both glass absorption and scattering, increased propagation speed and reduced optical nonlinearities making hollow core optical fiber very attractive for use in applications such as telecommunications. However, manufacturing hollow core optical fiber in lengths that are practical for telecommunications (tens to hundreds of kilometers) is challenging owing to the complexities in controlling the microstructure within the hollow core fiber. This is particularly important if hollow core fibers are to be used to connect data centers located in geographically remote areas. A class of hollow core optical fibers which has been shown to have beneficial optical properties is antiresonant hollow core fiber (AR-HCR or ARF).

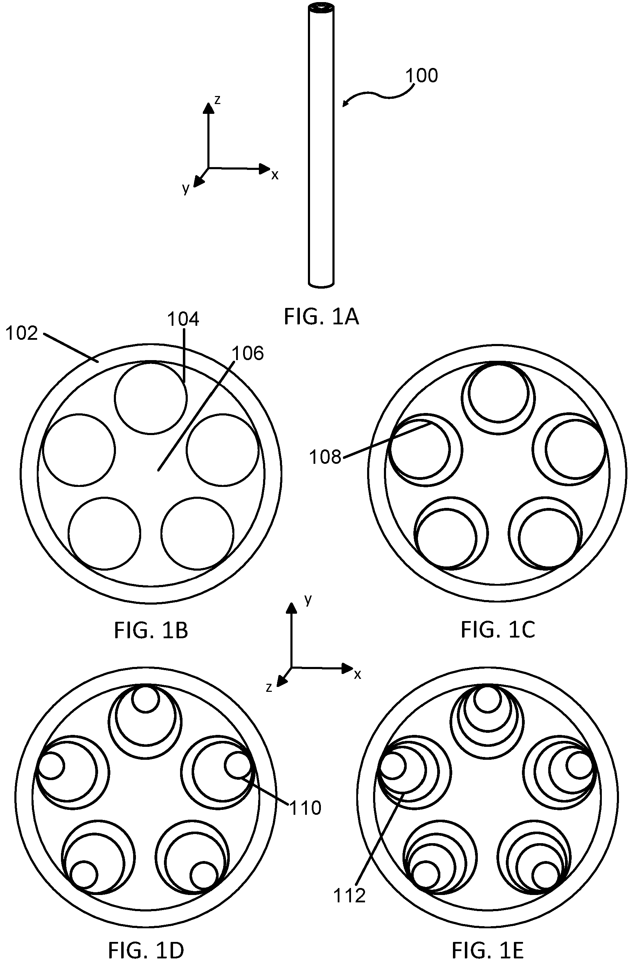

Antiresonant hollow core fibers are characterized by the design of their internal structure (i.e., the microstructure) within a glass tubular cladding. These fibers guide light at antiresonant wavelengths governed by the geometry of the microstructure. Guiding light in this way can offer a wider bandwidth compared to other hollow core fiber designed such as photonic bandgap fibers and also minimize the electric field at the air-glass interface which can help reduce the loss incurred from surface roughness scattering. FIGs. 1B-1E show examples of the internal structure of a collection of antiresonant hollow core designs. FIG. 1A shows a schematic diagram of the side view of a hollow core optical fiber 100.

FIG. 1B shows a schematic transverse cross-sectional view of an antiresonant hollow core fiber (HCF). The HCF optical fiber has an outer tubular cladding 102, a structured, inner, cladding comprising a plurality of tubular capillaries 104 extending longitudinally along the length of the fiber which are attached to the inner surface of the tubular cladding. The plurality of tubular capillaries 104 is arranged to form a ring around the inner surface of the tubular cladding and define a hollow core 106. The tubular capillaries define the plurality of voids surrounding the hollow core, and in some cases are spaced evenly around the inner surface of the outer cladding.

FIG. 1C shows a schematic transverse cross-sectional view of a nested antiresonant nodeless fiber (NANF) which falls into the category of antiresonant HCFs. It differs from the antiresonant HCF of FIG. 1B in that it includes first additional capillaries 108 nested within the tubular capillaries 104. The inclusion of nested capillaries has been shown to reduce loss within antiresonant hollow core fibers and also to improve the model purity. It achieves this by making the fiber single mode, suppressing the higher order modes which is a quality that is desirable for data transmission.

FIG. 1D shows a schematic transverse cross-sectional view of a double nested antiresonant nodeless fiber (DNANF) which falls into the category of antiresonant HCFs. It differs from the NANF of FIG. 1C in that it includes a second additional capillary 110 nested within the larger nested capillaries. The addition of further nested capillaries provides an additional reduction of optical losses within antiresonant hollow core fibers.

FIG. 1E shows a further extension of the DNANF which is the triple nested antiresonant nodeless fiber (TNANF) which falls into the category of antiresonant HCFs. The TNANF differs from the DNANF whereby a third additional capillary 112 included into the sets of nested capillaries. The inclusion of another nested capillary has also been shown to provide an additional reduction of optical losses within antiresonant hollow core fibers.

Optical loss in HCFs is primarily determined by the design, geometry and longitudinal uniformity of the microstructure (e.g., in DNANF, by the size and thickness of resonators, or nested capillaries, defining the hollow core). These properties define the transmission window (the range of wavelengths which are transmitted) and its depth (how low the transmission loss is at those wavelengths). During manufacture of HCFs, it is therefore critical to control the geometry of the internal structure to ensure optimal optical performance.

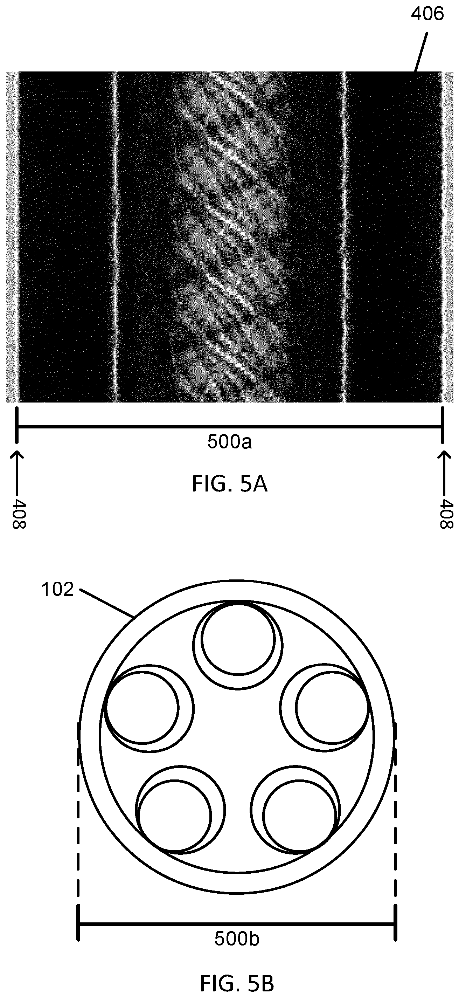

Amongst the key components of the internal structure of the antiresonant HCF to be monitored is the outer diameter, the inner diameter, the diameter of the hollow core and the spacing between the capillaries arranged around the inside surface of the outer tubular cladding. These characteristics of the cross-sectional structure of an antiresonant HCF are illustrated in FIGs. 5A to 8B and will be discussed in more detail herein. Each of these elements of the internal structure influence both the integrity as well as the optical properties of the antiresonant HCF.

Monitoring the internal structure of HCFs is challenging for a number of reasons. It is highly desirable for the geometry of the internal structure to be measurable whilst the fiber is being drawn. The monitoring techniques therefore needs to be able to perform measurements at high draw speeds. In some examples, the draw speed can be as high as 3000 meters per min or even higher. Slowing down the draw speed such that measurements can be performed results in a reduction in manufacture efficiency. The monitoring of the internal structure also needs to be non-destructive if the monitoring takes place during manufacture to not effect the quality of manufactured fibers. Finally, measurements need to take place in real-time during manufacture such that the readings can be fed back to the systems controlling the fiber draw. This ensures errors in the fiber can be identified instantly to prevent the continuous manufacture of faulty optical fiber. In addition, being able to instantly feedback the geometry of the internal structure to a draw control system means drawing parameters (e.g., draw speed, pressure applied to each of the nested capillaries, tension, draw furnace temperature) can be altered to ensure consistent drawing results.

Various techniques for monitoring hollow core fibers have been developed, however they have not been able to overcome the challenges associated with inline monitoring and control of antiresonant HCF internal microstructure. For example, the use of suitable IR or visible light cameras to inspect an illuminated optical fiber at its guiding wavelength so that defects in the fiber can be identified does not reveal details about the HCF microstructure.

Optical side scattering radiometry (OSSR) is another technique that has been used to inspect HCFs. OSSR uses an integrating sphere with a suitable detector to collect light that is scattered out of an illumination HCF to reveal microstructure non-uniformities. However, this technique also does not reveal details about the internal structure of the HCF.

Micro x-ray computed tomography, which uses x-ray imaging and tomography techniques, is a technique which can be used to resolve highly detailed microstructural geometry of HCFs. This method is extremely slow and not suitable for inline monitoring processes.

In contrast, the technique described herein, which is also referred to as Transmission Optical Side Micrograph Computed Tomography (TOSMiCT), reveals detailed information of relatively complex HCFs (e.g., DNANFs) and operates at relatively high draw speeds and provides high longitudinal resolution along the fiber length. For example, the TOSMiCT technique is able to collected data where draw speeds exceed 3000 meters per minute. The technique utilizes a combination of multiple optical microscopes to capture magnified radiograph-like images of antiresonant HCFs using visible light and tomography methods to determine the microstructure of HCFs. This technique can be incorporated into the HCF manufacture process.

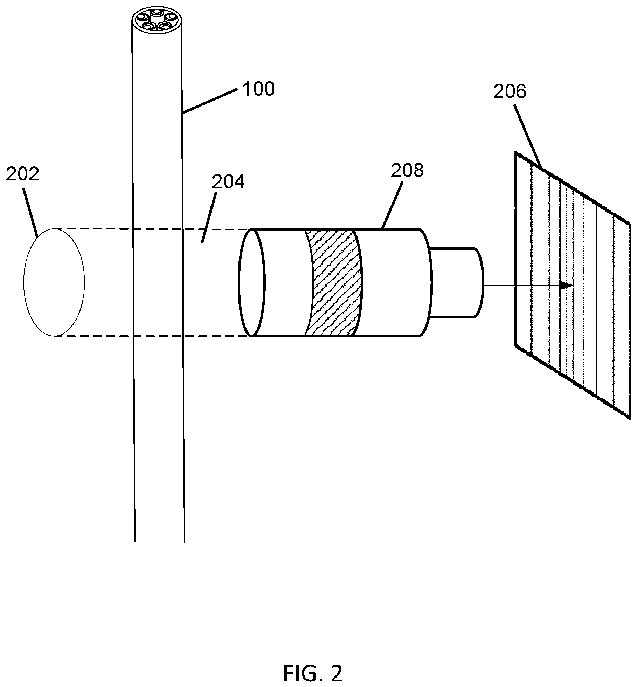

FIG. 2 illustrates the basic principle of the TOSMiCT technique described herein. A light source 202 and an optical microscope 208are positioned on opposing sides on an antiresonant HCF 100. The optical microscope 208 captures a side image of the antiresonant HCF 100 that has been illuminated by the light source 202. The light emitted by the light source can either be collimated or uncollimated. The transmitted light 204 which passes through the antiresonant HCF 100 and is collected by the optical microscope creates a striped pattern 206. The detected striped pattern is also referred to as a micrograph. The stripes stem from the light from the light source 202 being diffracted by the internal structure of the antiresonant HCF as well as the refraction of the light as it passes through the HCF, as well as interference of the light being diffracted by the antiresonant HCF. The characteristics of the striped pattern are therefore directly influenced by the geometry of the HCF including its internal microstructure (e.g. the arrangement of capillaries as shown in FIGs. 1B-1E) and the outer cladding 102.

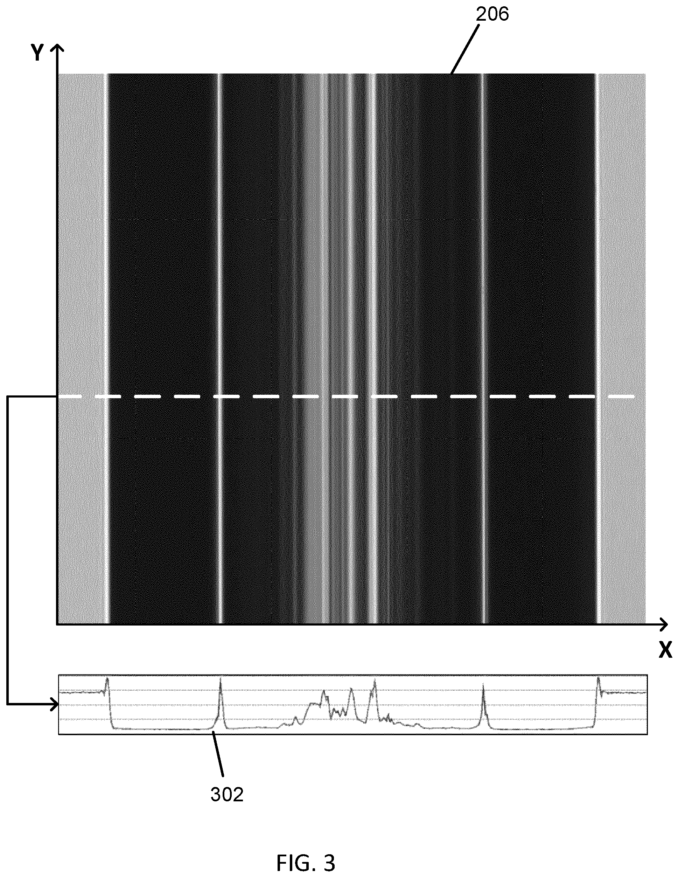

An example micrograph detected from a single position from the side of the HCF is presented in FIG. 3. Specifically, the micrograph 206 is of a NANF (see FIG. 1C). The y-axis of the micrograph 206 is representative of the longitudinal displacement along the length of the HCF. The x-axis of the micrograph 206 is representative of the variations in light intensity (or pixel intensity of the micrograph detected by the optical microscope), also referred to as an intensity profile, caused by the diffraction and interference of the light passing through the HCF as discussed previously. FIG.3 shows an intensity plot 302 taken from a single row of pixels from the micrograph 206. Given the complexity of the internal structure of antiresonant HCFs, such as DNANFS, the necessary information to fully characterize the geometry of the internal structure cannot be obtained from a single micrograph.

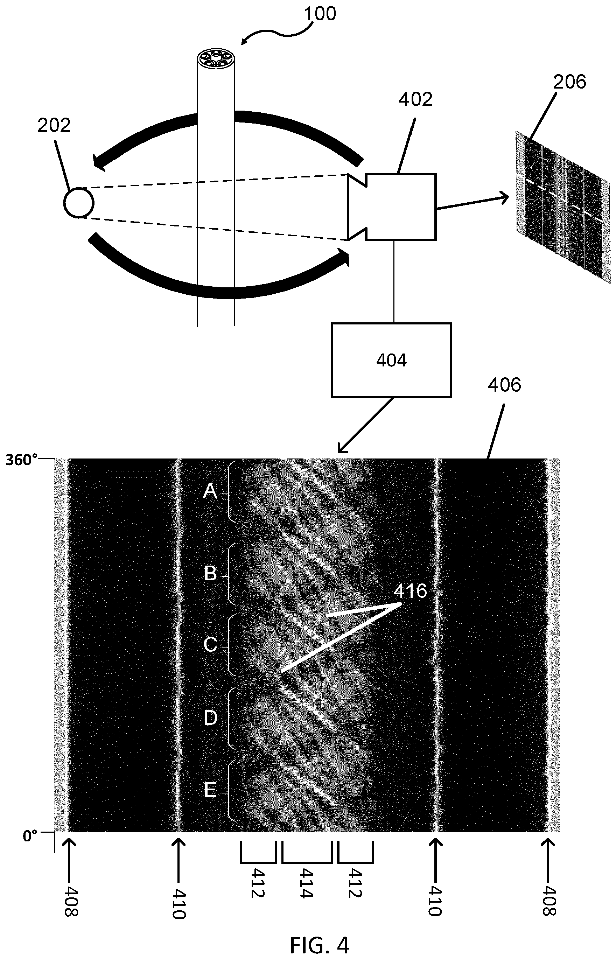

FIG. 4 illustrates how, by collecting micrographs at a plurality of angles around the circumference of the HCF, the internal microstructure of the HCF can be characterized. FIG. 4 shows a light source 202 and an optical microscope 402 positioned on opposing sides of the longitudinal section of an antiresonant HCF 100. The arrows represent the light source 202 and the optical microscope 402 being positioned at a plurality of angles around the circumference of the HCF 100 (e.g. as the light source 202 and optical microscope 402 are rotated in an anti-clockwise direction around the HCF 100). As will be explored in more detail later, there are a number of ways multiple micrographs can be detected from a plurality of angles including: using a plurality of light source-optical microscope pairs arranged in a circle around the HCF, rotation of one or more optical microscopes around the HCF, and/or rotation of the HCF relative to one or more optical microscopes. It should be appreciated that positioning the light source and the optical microscope at a plurality of angles around the circumference of the HCF includes any of these configurations.

At each angle of the plurality of angles, the optical microscope 402 detects a micrograph 206 including an intensity profile for a single longitudinal position along the HCF 100 or an intensity profile from an integration of the intensity profiles from multiple positions along the longitudinal length of the HCF 100. The intensity profiles are communicated to a microstructure measuring system 404 which employs computed tomography to convert the plurality of intensity profiles into a sinogram 406. Each increment along the y-axis of the sinogram 406 represents the different angles from which micrographs are detected around the circumference of the antiresonant HCF. Hence why the y-axis ranges from 0° to 360° in the sinogram 406. The increments along the y-axis of the sinogram are dictated by how many positions of the light source and optical microscope are used. The example sinogram presented in FIG. 4 is of a NANF where the angular resolution (increments along the y-axis) is 4°. In one example configuration, using 28 optical microscopes (arranged in a configuration as explained later) provides an angular resolution of 12.86°. The x-axis, as explained previously, represents the intensity profile from the micrographs across the width of the HCF.

The sinogram 406 exhibits numerous consistent characteristics for antiresonant HCFs (including NANFs, DNANFs and TNANFs) that reflect the structure of the fiber. The sinogram 406 includes a first pair of vertical stripes 408 exhibiting bright or high intensity positioned towards the outside of the sinogram (e.g. at extreme low and high values on the x-axis). The sinogram 406 also includes a second pair of vertical stripes 410 positioned inside the first pair of vertical stripes 408. Similarly, the second pair of vertical stripes 410 also exhibit bright or high pixel intensity relative to nearby pixels. The central portion of the sinogram 406 shows a vertically repeating pattern. Since the sinogram 406 has been constructed from a NANF comprising five tubular capillaries arranged in a ring around the inner surface of the outer tubular cladding, the vertically repeating pattern comprises five repetitions. For example, the diagonal elements of the pattern in the central portion of the sinogram 406 repeats five times, as indicated by the brackets labelled A-E in FIG. 4. The pattern in the central portion of the sinogram 406 is made up of a pair of columns 412 comprising a first pattern and a single column 414 comprising a second pattern that is different to the first pattern. Each column extends over the entirety of the length of the y-axis of the sinogram but only a portion of the width of the x-axis of the sinogram. The pair of columns 412 comprising the first pattern are positioned inside the second pair of vertical stripes 410 and the single column 414 comprising the second pattern is positioned within the pair of columns 412. The pair of columns 412 and the single central column 414 are positioned immediately adjacent to one another such that two boundaries 416 are present between the outer edges of the single central column 414 and inside edges of the pair of columns 412. It should be noted that although the pair of columns 412 and the single central column 414 comprise different patterns, there are features of the sinogram that pass through both the pairs of columns 412 and the single central column 414. For example, the sinogram 406 shows five diagonal dark (lower intensity) lines and five diagonal light (higher intensity) lines of different orientation passing through all three of the central columns (the pair of columns 412 and single central column 414). To further clarify the description of the sinogram 406 for antiresonant HCFs, the edges of the columns are defined by regions with repeating patterns aligned along the y-axis (or aligned with the first 408 and second 410 pairs of stripes). The features of the sinogram 406 represent characteristic microstructural features of antiresonant HCFs and can therefore be used to monitor the microstructure of HCFs during manufacture.

FIGs. 5A and 5B illustrate how the outer diameter of the outer tubular cladding 102 of an antiresonant HCF can be determined from a sinogram 406 generated using the technique explained previously. The distance 500a between the first pair of vertical stripes 408 shown in FIG. 5A is representative of the outer diameter 500b of the outer tubular cladding 102 as shown in the schematic diagram of a NANF in FIG. 5B. In some examples, the outer diameter 500b can be obtained from a single micrograph such as that illustrated in FIG. 3. In addition, an ovality of the outer diameter 500b of the antiresonant HCF can be obtained from the sinogram 406. The ovality can be obtained by monitoring the distance 500a between the first pair of vertical stripes 408 through 360° (i.e., along the y-axis of the sinogram 406). Ovality can be obtained by measuring the variation of the distance 500a between the first pair of vertical stripes 408 on the sinogram 406.

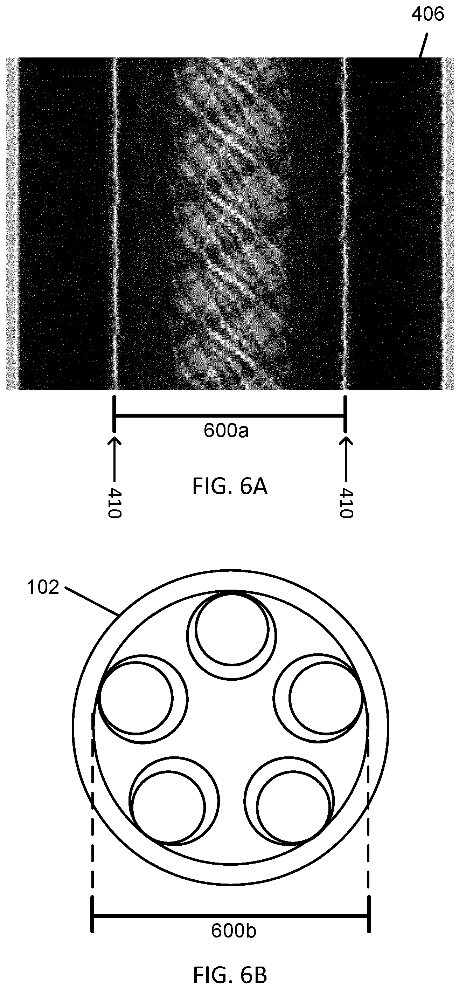

FIGs. 6A and 6B illustrate how the inner diameter of the outer tubular cladding 102 of an antiresonant HCF can be determined from a sinogram 406 generated using the technique explained previously. The distance 600a between the second pair of vertical stripes 410 shown in FIG. 6A is representative of the inner diameter 600b of the outer tubular cladding 102 as shown in the schematic diagram of a NANF in FIG. 6B. In the same fashion for obtaining the ovality of the outer diameter, the ovality of the inner diameter 600b can be obtained from the sinogram 406 by monitoring the distance 600a between the second pair of vertical stripes 410 through 360° (i.e., along the y-axis of the sinogram 406). The ovality can be obtained by measuring the variation of the distance 600a between the second pair of vertical stripes 410 on the sinogram 406.

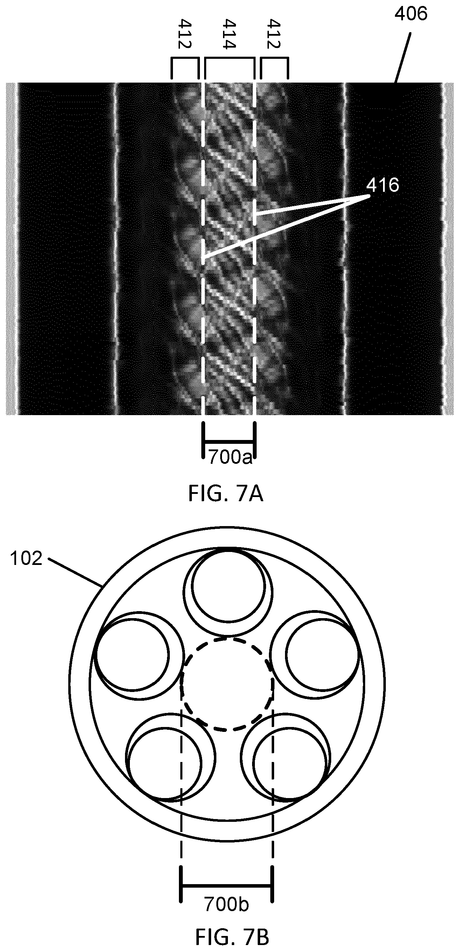

FIGs. 7A and 7B illustrate how the diameter of the hollow core 106 of an antiresonant HCF can be determined from a sinogram 406 generated using the technique explained previously. The distance 700a between the boundaries 416 between the first pair of columns 412 comprising the first pattern and the single column 414 comprising the second pattern is representative of the diameter of the hollow core of the antiresonant HCF as shown in the schematic diagram of a NANF in FIG. 7B.

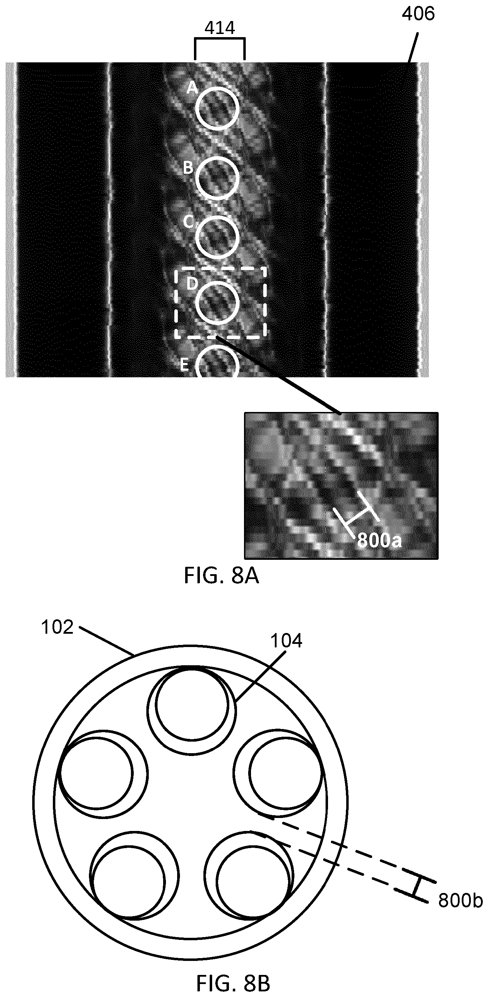

FIGs. 8A and 8B illustrate how the spacing between the tubular capillaries (or the outermost tubular capillaries for the NANF, DNANF and TNANF antiresonant HCFs) arranged around the inside surface of the outer tubular cladding 102 can be determined from a sinogram 406 generated using the technique explained previously. The second pattern contained within the central single column 414 includes a number of intensity features. The inventors have discovered that pairs of dark (or relatively low intensity) diagonal lines which are entirely contained with the single column 414 and positioned centrally within the single column 414 correspond to the gaps (or spacing) between the tubular capillaries 104 arranged on the inside surface of the outer tubular cladding 102. Where gaps are present between all of the tubular capillaries (i.e., there is no contact between the capillaries) arranged around the inner surface of the outer tubular cladding, the number of pairs of dark diagonal lines corresponds to the number of tubular capillaries incorporated into the antiresonant HCF. Using the example where five tubular capillaries (or sets of tubular capillaries) are incorporated into the HCF, the sinogram 406 includes five pairs of dark diagonal lines arranged vertically (aligned parallel to the y-axis) along the central single column 414 representing the five gaps between the tubular capillaries 104. The five pairs of dark, low intensity diagonal lines are circled A to E in the sinogram 406 in FIG. 8A. The distance 800a between the dark diagonal lines for each pair of lines is representative of the size of the spacing 800b between each of the tubular capillaries 104 as illustrated by FIG. 8B.

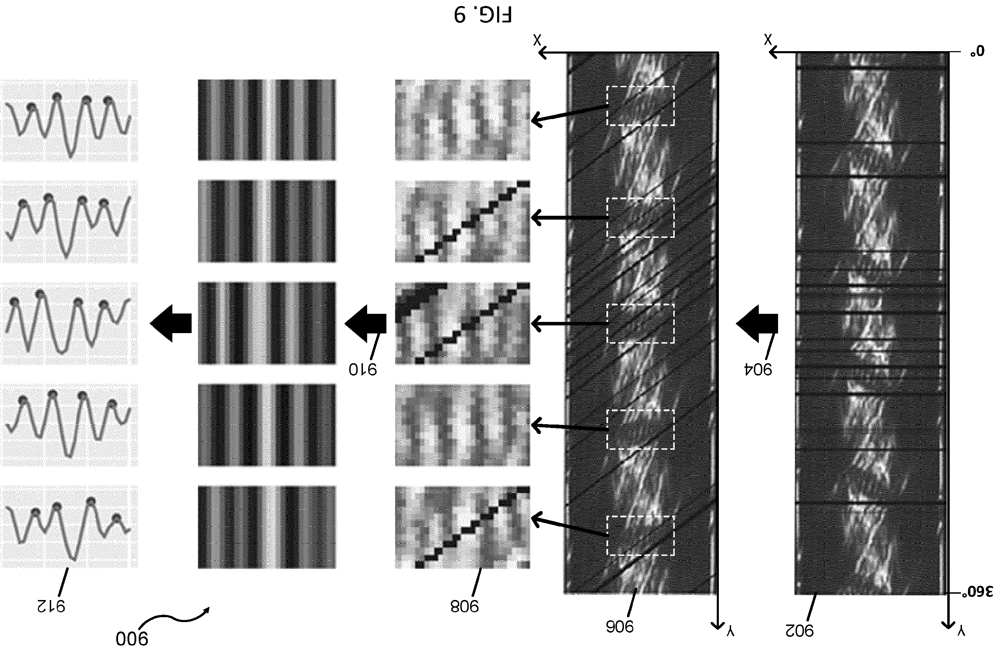

In some examples the sinogram may be further processed to improve the reliability of the spacing 800b measurement between each of the tubular capillaries 104. A worked example of this further processing is illustrated in FIG. 9. The process 900 starts with a sinogram 902. The y axis extends from 0° to 360° for a full rotation around the antiresonant HCF. The x axis, as explained previously, represents the intensity profile from the micrographs across the width of the HCF. In this example, the middle section from a sinogram 406 such as the one shown in FIG. 4 is taken. The singorams 902 shows the repeating pattern running parallel to the y axis of the sinogram. The dark horizontal lines (parallel to the x axis) shown in the data show where data has not been collected.

A vertical shear operation 904 is performed on the sinogram to produce a sheared sinogram 906. The vertical shear operation shifts pixels of the sinogram up and down relative to the y axis according to their distance from the middle (along the x axis) of the sinogram. Sections of the sheared sinogram are then extracted 908 which correspond to the regions of dark (low intensity lines). A horizontal shear operation is then performed on the extracted segments 908. The horizontal shear operation shifts pixels of the extracted segments left and right relative to the x-axis according to their distance from the middle (along the x axis) of the sinogram. After the two shear operations, the dark (low intensity) lines are, at least approximately, parallel to the y axis.

The extracted segments are then averaged 910 to produce defined intensity lines relative to the y axis of the extracted segments. To improve the averaging of the sheared extracted segments, a weighted average may be used. The pixels are weighted according to how recent the data is. For example, a time-dependent exponential function may be used to weight the intensity data. After averaging 910, the extracted segments are now one dimensional and can be plotted on a set of axis according to the intensity. Intensity profiles 912 corresponding to the spacing between each of the tubular capillaries are then formed. Since the example used in FIG. 9 is of an antiresonant HCF with five-fold symmetry, five intensity profiles are produced. The distances between the two minima nearest the center of the sinogram of each intensity profile is then determined which are representative of the spacing 800b between each of the tubular capillaries 104 as illustrated by FIG. 8B. By performing the additional processing of the sinogram using the process 900 in FIG. 9, automatic measurement of the size of the spacing can be made more reliably.

As shown in FIGs. 5A to 8B a sinogram 406 constructed from a plurality of micrographs detected at a plurality of angles around the circumference of an antiresonant HCF can be used to monitor a number of structural characteristics of the fiber. All of the measurable characteristics highlighted in FIGs 5A to 8B influence the optical performance of the antiresonant HCF. Therefore, being able to measure said characteristics provides the means to control the structure of the antiresonant HCF to ensure consistent manufacture of the fiber. Since the technique only requires the use of a simple optical microscope and a light source, it can easily be incorporated inline during the manufacture of antiresonant HCF. In addition, since the components are simple, they can collect measurements on a relatively short time scale meaning it can be implemented inline without having to reduce the draw speed of the fiber manufacture process.

Referring back to FIG. 8A, it was discussed that identifying and calculating the distance between pairs of dark (or relatively lower intensity) diagonal lines in the central single column of the sinogram provides a measurement of the spacing between tubular capillaries arranged around the inner surface of an outer tubular cladding. This feature of the sinogram, or lack of, contained within the central single column can also be used to detect a failure of the internal structure during the manufacture of antiresonant HCFs.

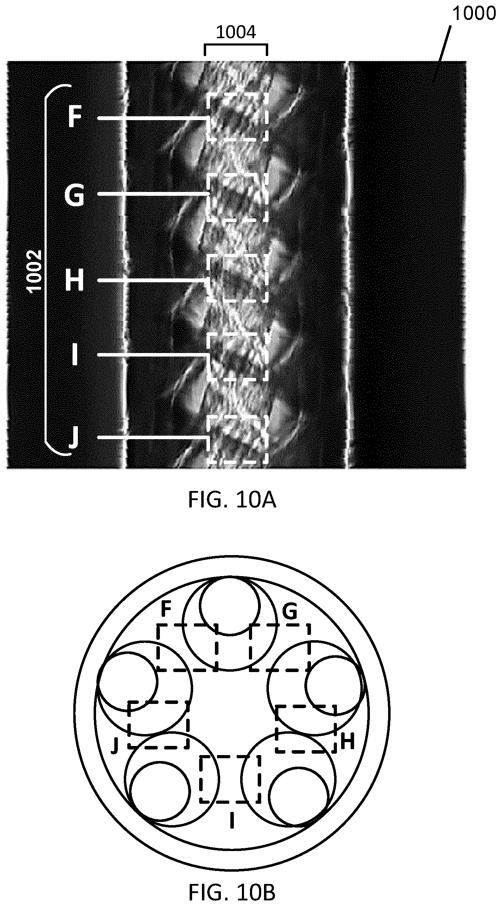

FIG. 10A shows another example sinogram 1000 constructed from micrographs detected around a NANF. The regions 1002 labelled F to J highlight where within the central single column 1004 the pairs of diagonal dark lines are expected to be present. However, in regionals H and J of the sinogram 1000 of FIG. 10A, there is an absence of a pair of dark diagonal lines. The absence of the pair of diagonal dark lines is due to neighboring tubular capillaries contacting one another which is shown schematically in FIG. 10B where the regions H and J show contact between tubular capillaries. Therefore, the sinograms can also be used to detect a failure of the fiber drawing manufacture due to tubular capillaries contacting one another.

When using additional processing of the sinogram as shown in FIG. 9, the absence of the pairs of dark diagonal lines is shown by there being a minima missing (i.e., only three are present proximate to the center of the sinogram) from the intensity profile. Therefore, when adopting the additional processing, the absence of a minima from the intensity profile may be used to detect contact between tubular capillaries.

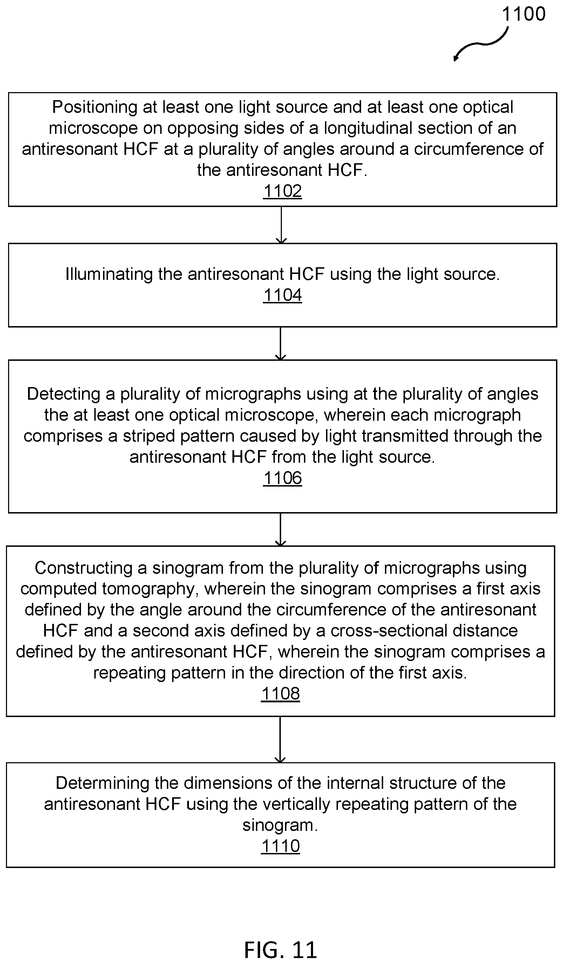

FIG. 11 illustrates a method 1100 of determining dimensions of an antiresonant HCF, as discussed above. Firstly, at step 1102, the method includes positioning at least one light source and at least one optical microscope on opposing sides of a longitudinal section of an antiresonant HCF at a plurality of angles around a circumference of the antiresonant HCF. Once the optical microscope-light source pairs have been positioned, step 1104 includes illuminating the antiresonant HCF using the light source. With the antiresonant HCF illuminated, step 1106 includes detecting a plurality of micrographs using at the plurality of angles the at least one optical microscope, wherein each micrograph comprises a striped pattern caused by light transmitted through the antiresonant HCF from the light source. The method proceeds to step 1108 which includes constructing a sinogram from the plurality of micrographs using computed tomography, wherein the sinogram comprises a first axis defined by the angle around the circumference of the antiresonant HCF and a second axis defined by a cross-sectional distance defined by the antiresonant HCF, wherein the sinogram comprises a repeating pattern in the direction of the first axis. The method proceeds to step 1110 which includes determining the dimensions of the internal structure of the antiresonant HCF using the vertically repeating pattern of the sinogram.

As discussed previously, micrographs detected from a plurality of angles around the circumference of an antiresonant HCF can be obtained using numerous configurations of one of or a plurality of optical microscopes and light sources.

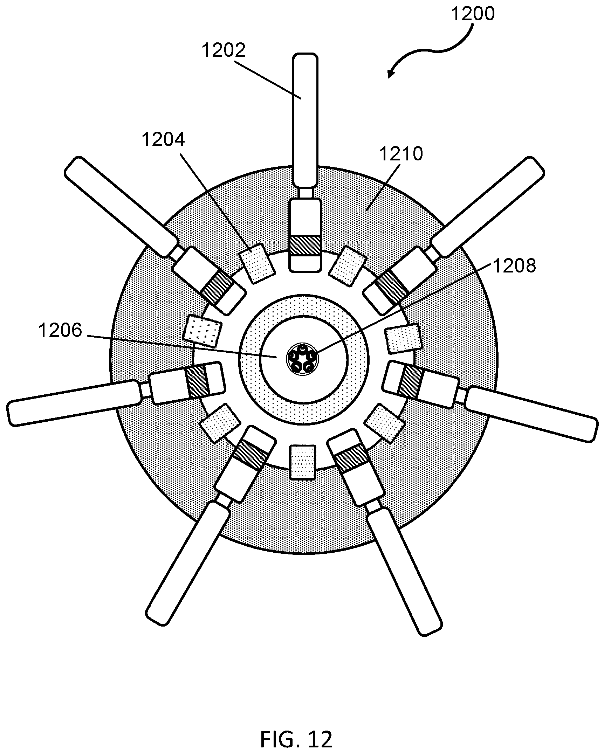

FIG. 12 shows a schematic diagram of a top view of a TOSMiCT configuration 1200 of optical microscopes and light sources for generating a plurality of micrographs from a plurality of angles around the circumference of an antiresonant HCF. The configuration comprises a plurality of optical microscopes 1202 with corresponding light sources 1204 arranged on opposing sides of an opening 1206 for the HCF 1208. In some examples, the optical microscopes 1202 and light sources 1204 may be supported on a mount 1210. In this configuration there are seven pairs of optical microscopes and light sources however any number of pairs is possible. In some examples, to reduce interference between light source-optical microscope pairs, when a measurement is taken by one of the optical microscopes 1202, all light sources 1204 apart from the light source opposite the optical microscope performing the measurement can be dimmed or turned off.

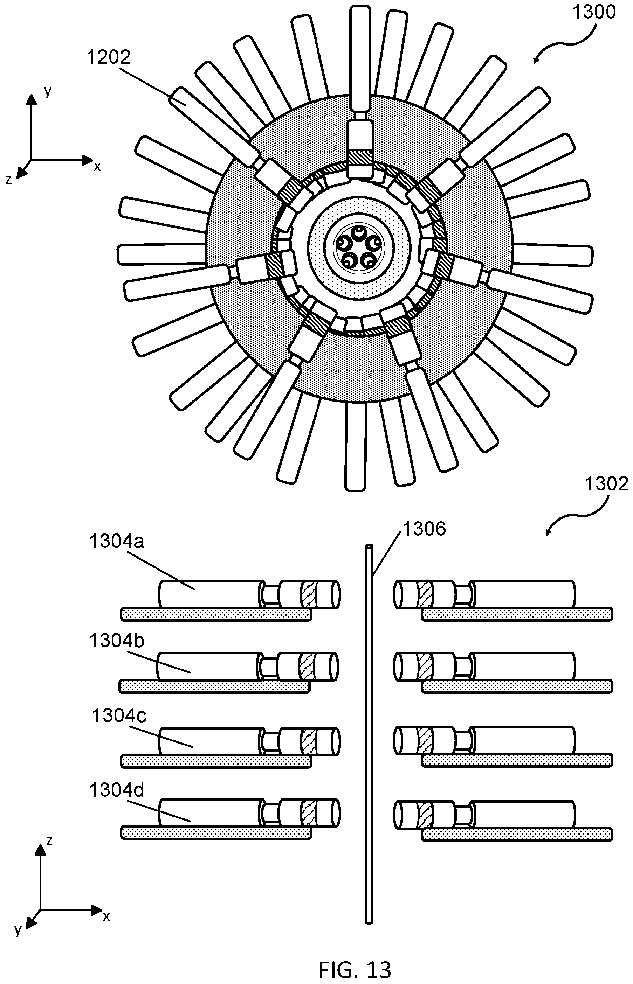

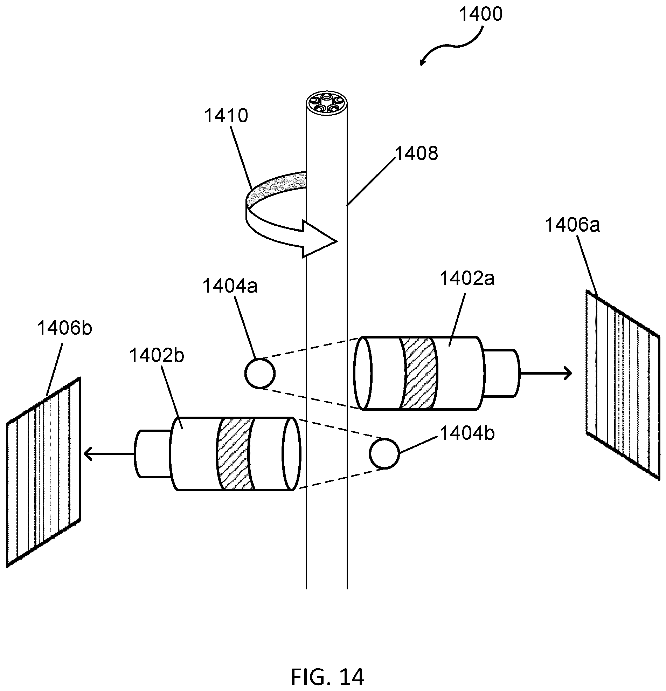

Although it is not depicted in FIG. 12, the optical microscopes are each connected to a central system configured to receive micrographs, and/or intensity profiles, detected by the plurality of optical microscopes 1202. The central system uses the plurality of received micrographs to generate a sinogram which can be processed to characterize the microstructure of the antiresonant HCF 1208 as explained previously in reference to FIGs. 5A to 8B. The central system, or a microstructure measuring system 404 as referred to in reference to FIG. 4, may be programmed to automatically identify the expected or typical features present in sinograms of antiresonant HCFs and output readings for at least one of the outer diameter of the outer tubular cladding, the inner diameter of the outer tubular cladding, the diameter of the hollow core, and/or the spacing between the tubular capillaries arranged around the inner surface of the outer tubular cladding. The use of a microstructure measuring system is also applicable to the TOSMiCT configurations described in reference to FIGs. 13 and 14.

Due to space constraints around the fiber and the size of the optical microscopes, it may not be possible to achieve a high angular resolution using a plurality of optical microscopes arranged around the fiber being monitored in a single layer. Using FIG. 12 as an example, using 7 light source-optical microscope pairs would only provide an angular resolution of 51.42° which may produce sinograms with harder to distinguish features. To achieve a higher angular resolution, multiple levels or layers of optical microscopes arranged around the fiber may be used. This configuration is illustrated in FIG. 13 which shows a top view 1300 and a side view 1302 of a multilayered TOSMiCT configuration. To simplify the drawing and highlight the higher angular resolution, the light sources have been removed although it should be appreciated that in the practice the lights sources positioned at each layer as illustrated in FIG. 12. The multilayered TOSMiCT 1300 comprises multiple layers of the configuration illustrated in FIG. 12 which are vertically displaced and rotated relative to one another such that a higher angular resolution is achieved. This is shown in the top view 1300 where the optical microscopes are shown to form a complete circle from the perspective of the top view. The example shown in FIG. 13 shows 4 layers of 7 optical microscopes arranged to provide micrographs from 28 different angles around the antiresonant HCF. The side view 1302 of the multilayered TOSMiCT configuration shows a first layer 1304a, a second layer 1304b, a third layer 1304c and a fourth layer 1304d of optical microscopes arranged around a fiber 1306. The multilayered TOSMiCT configuration therefore provides an angular resolution of 12.86° which is significantly higher compared to the angular resolution of the TOSMiCT configurations of FIG. 12.

An additional benefit of the multilayered TOSMiCT configuration is that fiber tilt can also be detected. When the preform is mounted on a draw tower the tower may tilt due to the weight of the preform. The tilt of the draw tower may also be influenced by the addition of measuring and fiber drawing components. The tilt of the draw tower may also change as the preform is consumed.

In the multilayered TOSMiCT configuration, each layer assembly may include a X-Y lateral positioner. The X-Y positioner is used to align the light source-optical microscope pairs with the fiber to ensure the fiber is in focus with respect to the optical microscopes. The light source-optical microscope pairs of each layer are aligned when the preform is mounted using the X-Y positioners. Taking a reading from each of the X-Y positioners from the multiple layers and determining the relative positions from each layer can be used to determine the initial fiber and tower tilt. In addition, the same alignment of the layer assemblies is performed as the tower tilts during fiber draw requiring the individual X-Y positioners to be moved. Therefore, the tower and fiber tilt can be determined during the fiber draw by determining the deviation from the initial X-Y position of each layer of the multilayered TOSMiCT configuration.

FIG. 14 shows a schematic diagram of another TOSMiCT configuration referred to herein as a rotational TOSMiCT configuration 1400. The rotational TOSMiCT configuration comprises two pairs of optical microscopes 1402a, 1402b and light sources 1404a, 1404b where the two optical microscopes (and the light sources) are arranged 90° to one another. FIG. 14 shows the two light source-optical microscope pairs being vertically displaced, however they may also be positioned at the same vertical displacement. The two optical microscopes 1402a, 1402b both detect micrographs 1406a, 1406b in the same manner as explained previously. The fiber 1408 in the rotational TOSMiCT configuration is rotated shown by the arrow 1410 in FIG. 14. A sinogram is generated by rotating the fiber 1408 continuously whilst detecting micrographs at fixed time intervals using the two optical microscopes 1406a, 1403b. The plurality of micrographs 1406a, 1406b detected at different time intervals are used to construct the sinogram. By controlling the rate of rotation 1410 and the rate at which micrographs are detected, the angular resolution of the sinogram can be modified. Compared to the TOSMiCT configuration shown in FIG. 12 and the multilayer TOMSiCT configuration shown in FIG. 13, the rotational TOSMiCT configuration 1400 occupies less of space thus making it more adaptable to different HCF manufacturing systems.

The techniques and configurations described so far provide an effective means of measuring a number of structural characteristics however they do not reveal the diameters of nested capillaries that are present in the NANF (FIG. 1C), DNANF (FIG. 1D), and TNANF (FIG. 1E). To provide a complete characterization of the antiresonant HCF cross-sectional microstructure, the TOSMiCT techniques described above may be combined with an interferometric based technique to reveal the diameters of nested capillaries in a DNANF.

As explained so far, the TOSMiCT based techniques provide an effective means of measuring various characteristic of the cross-sectional structure of antiresonant HCFs. FIGs 5 to 8, along with the accompanying descriptions, show how the outer and inner diameter of the outer cladding 102, the diameter of the hollow core and the presence and size of the gaps between tubular capillaries 104 can be determined. In some examples, the diameter of the largest tubular capillaries 104 (arranged around the inner surface of the outer cladding) can be indirectly measured using the measurements of the inner diameter of the outer cladding 600b, the diameter of the hollow core 700b and the separation between each of the tubular capillaries 700b. For example, the half of the difference in the inner diameter of the outer cladding 600b and the diameter of the hollow core 700b can provide an approximate measurement of the diameter of the largest tubular capillary 104. However, this only provides an approximate measurement of the largest tubular capillary and does not provide a measurement of any nested tubular capillaries (e.g., 108, 110 and 112 from FIGs. 1C, 1D and 1E respectively).

An improvement to the TOSMiCT techniques described above is provided by combining the techniques with interferometry-based measurements as described herein. Measuring the diameters of the inner, middle and outer cladding capillaries after fiber-drawing presents a significant challenge since they are encased in the outer cladding and it is important that damage to the antiresonant HCF is avoided.

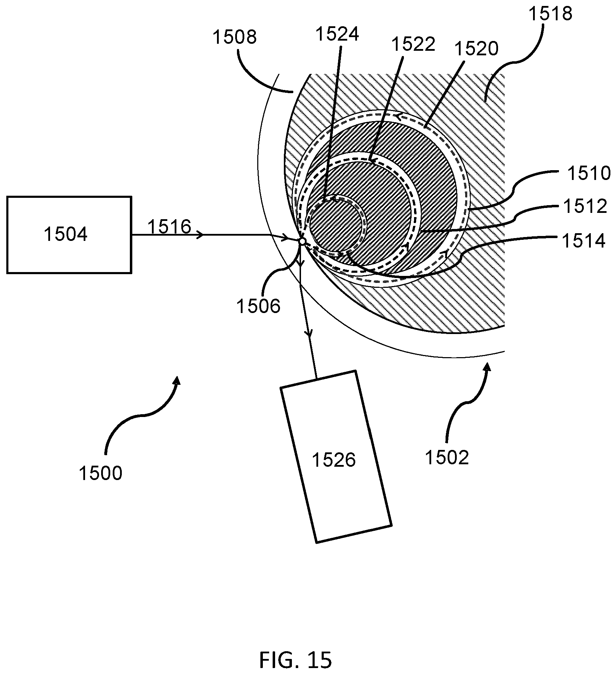

Non-destructive measurement of the diameter of capillaries nested within a tubular outer cladding can be achieved using interferometry-based techniques. FIG. 15 illustrates such an interferometric device 1500 in use on one of the plurality of nested capillaries in a DNANF 1502. Although the example described herein involves the use of the interferometric device 1500 on a DNANF 1502, the technique is also applicable to the antiresonant HCF shown in FIG. 1B (single tubular capillary), the NANF shown in FIG. 1C, and the TNANF shown in FIG. 1E. The interferometric device 1500 comprises a light source 1504 which is positioned proximate to the azimuthal location 1506 as the point of bonding between the outer capillary 1510 and the inner surface of the outer cladding 1508. The light source may be a broadband light source and/or an LED source. Light 1516 from the source is projected onto the side of the HCF which passes through the outer cladding 1508 and onto the azimuthal bonding location 1506 at the interface between the central hollow core 1518 and the outer cladding 1508. Some of the light 1516 is reflected off the interface at the azimuthal location 1506 and collected by a collection fiber 1526. Any other means of detecting the light reflected from the DNANF is also suitable such as a light sensor. The light reflected at the azimuthal location 1506 exits the light source 1504 and arrives at the collection fiber 1526 in time τ0 which is representative of the path length taken by the light 1516.

Fractions of the light couple into each of the cladding capillaries 1510, 1512, 1514 and traverse around the inner surface of each capillary via total internal reflection as shown by light paths 1520, 1522 and 1524 for the outer, middle and inner capillaries respectively. The light arriving at the collection fiber 1526 having traversed the outer 1510, middle 1512 and inner 1514 capillaries arrive at times τ1, τ2 and τ3 after τ0 respectively. To summarise, light 1520 arriving from the outer cladding capillary 1510 has a travel time of τ0 + τ1, light 1522 arriving from the middle cladding capillary 1512 has a travel time of τ0 + τ2, and light 1524 arriving from the inner cladding capillary 1514 has a travel time of τ0 + τ3. The travel time, and consequently the path length, of light 1520, 1522 and 1524 are used to calculate a circumference (and consequently, the diameter) of each of the capillaries.

The light traversing the different optical paths of the cladding capillaries constructively and descriptively interfere with one another when it arrives at the collection fiber 1526 and this interference manifests as an oscillating interference pattern in the spectral domain. Applying an inverse Fourier transform to this spectrum (time delay vs optical power) yields three peaks corresponding to the time delays from the different optical paths 1520, 1522, 1524 (τ1, τ2 and τ3) and an additional three peaks originating from the interfering fields exiting the HCF. These peaks which result from the interfering fields may be referred to as 'false peaks' and correspond to the time differences τ1 - τ2, τ1 - τ3 and τ2 - τ3. The times τ1, τ2 and τ3 can be converted into the diameter measurements D1, D2 and D3, corresponding to the diameters of the outer 1510, middle 1512, and inner 1514 cladding capillaries. The false diameter peaks therefore correspond to the difference between the diameters of the outer, middle and inner cladding capillaries: D1 - D2, D1 - D3, and D2 - D3. It follows that the location of the false peaks is contingent on the geometry of the cladding capillaries of the DNANF.

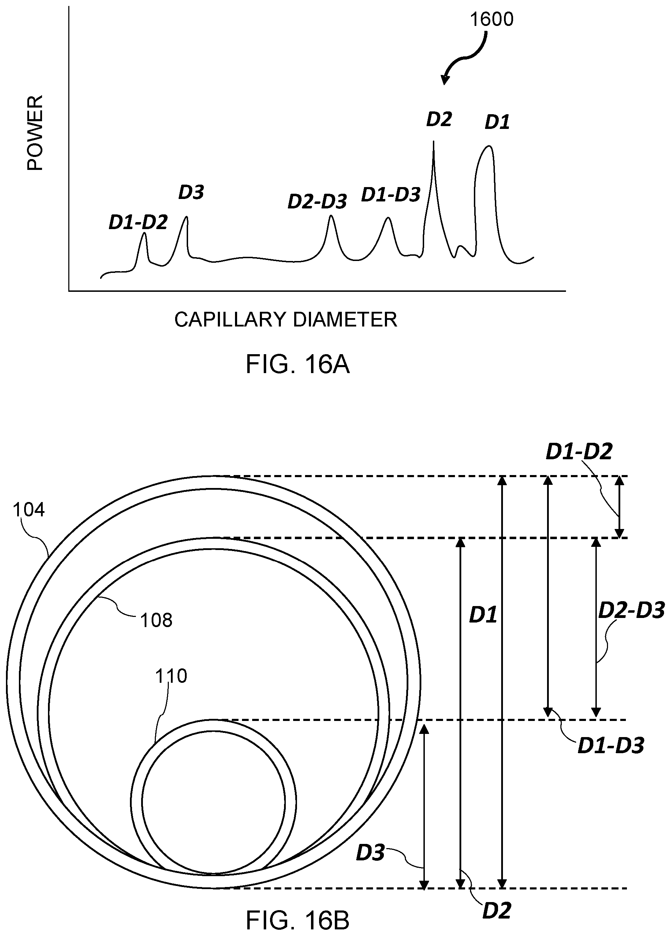

A suitable interferometric calculation can be employed to convert the interference pattern into a spectrum of diameter values, for example as discussed in Budd et al. "Non-destructive characterization of nested and double nested antiresonant nodeless fiber microstructure geometry" Optics Express. Vol. 31, Issue 22, pp. 36928-36939 (2023). FIG. 16A shows an example plot 1600 of the inverse Fourier transform (IFT) of a spectra collected by the collection fiber 1526 and fed into a spectrometer. The spectrometer may be connected to a computing device to collect the spectral data. The IFT plot 1600 produces six peaks including three 'real' peaks (which correspond to the time delays from the different optical paths) and three 'false peaks. The plot is accompanied with a schematic of the different diameters in FIG. 16B of the tubular capillaries 104, 108, 110 which shows the origin of the six peaks. As discussed previously, the optical paths with diameters, D1, D2 and D3, as shown in FIG. 16B, produce three real peaks and the interference between light from the three sources (diameters) produce an additional three false peaks shown as D1-D2, D1-D3 and D2-D3 in FIG. 16A.

Using the same principles, the spectrum (such as that shown in FIG. 16A) produced by the interferometric device 1500 when used to analyse an antiresonant HCF (such as that shown in FIG. 1B) produces a single peak corresponding to the diameter of the single tubular capillary. Again, using the same principles, the spectrum produced when used to analyse a NANF (as shown in FIG. 1C) includes three peaks including two peaks corresponding to the outer tubular capillary and the nested capillary and a single false peak caused by the interference between the light which has traversed the circumference each of the capillaries. This principle is further extendable to a TNANF structure (as shown in FIG. 1E) which would yield four real peaks and further additional false peaks.

By extracting the peaks from the plot 1600 of the IFT of the spectra collected by the collection fiber 1526, the diameters of the capillaries affixed to the inner surface of the antiresonant HCF can be measured non-destructively and in real-time. The interferometric device 1500 illustrated in FIG. 15 can also be integrated "in line" during the fiber manufacture. For example, the device may be positioned below the draw furnace in a draw tower configuration.

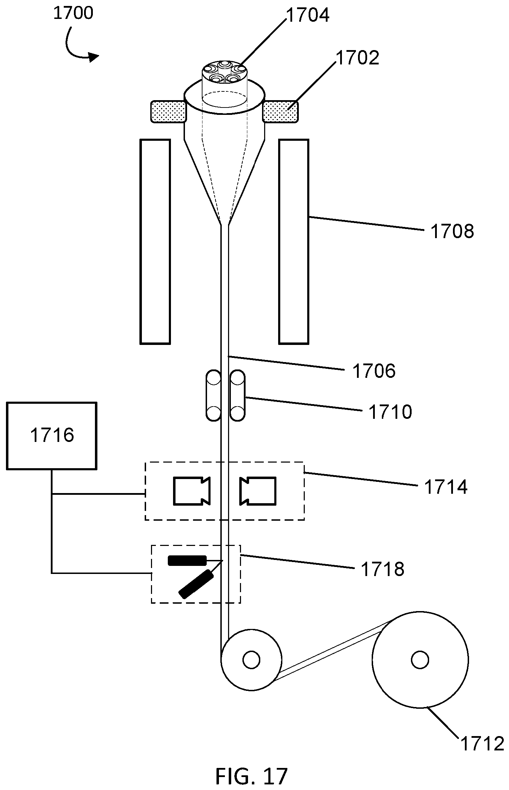

FIG. 17 shows a schematic diagram of a fiber draw tower 1700, used to manufacture antiresonant HCF, modified to include means for monitoring the microstructure of the HCF. The drawing tower 1700 comprises a mount 1702 for holding a preform 1704 from which an antiresonant HCF 1706 is drawn. The antiresonant HCF 1706 can be any of the examples illustrated in FIGs. 1B to 1E. Heat is applied to soften the glass preform using a draw furnace 1708 allowing it to be drawn into a fiber. A motor 1710 may be used draw the antiresonant HCF 1706 from the draw furnace 1708. The antiresonant HCF cools once it exits the draw furnace and forms a hardened optical fiber that can then be wound up on a spool 1712. Controlling the heating parameters in the draw furnace, as well as the speed and force applied to the fiber as it is pulled through the furnace, enables control of the diameter of the optical fiber.

The techniques for monitoring and measuring the internal structure of antiresonant HCFs can be integrated "in-line" into the draw tower. This means real-time data relating to the internal structure of the anti-resonant HCF can be monitored during manufacture. Such information can be used to adjust the drawing parameters including the temperature of the draw furnace, lateral position of the preform within the draw furnace, an amount of pressure applied to the tubular capillaries during draw and the draw speed.

FIG. 17 shows a TOSMiCT system 1714 which utilizes an optical microscope to collect micrographs using the principles discussed in relation to FIGs. 2 to 4 previously. The specific TOSMiCT configuration may be any of the examples illustrated in FIGs. 12 to 14. The TOSMiCT system 1714 is connected to a controller 1716 configured to receive to receive raw optical data and determine measurements relating to the internal structure of the antiresonant HCF 1706 such as those illustrated in FIGs. 5 to 10. In some examples, the controller 1716 outputs values for internal structure measurements on a display. In other examples, the controller 1716 provides the measurements to one or more systems configured to adjust draw parameters in the draw tower 1700.

The controller 1716 may also be connected to an interferometric device 1718. The interferometric device 1718 can provide additional information to complement the information provided by the TOSMiCT system 1714. For example, the interferometric device can provide diameter measurements for any tubular capillaries arranged around the inner surface of the outer cladding of the antiresonant HCF as shown in FIGs. 15 and 16.

Alternatively or in addition to the other examples described herein, examples include any combination of the following:
Clause A. A method for monitoring the internal structure of an antiresonant hollow core fiber, HCF, the method comprising: positioning at least one light source and at least one optical microscope on opposing sides of a longitudinal section of an antiresonant HCF at a plurality of angles around a circumference of the antiresonant HCF, wherein the antiresonant HCF comprises an outer tubular cladding and an internal structure comprising a plurality of tubular capillaries extending longitudinally along the length of the HCF which are attached to the inner surface of the tubular cladding, wherein the plurality of tubular capillaries define a hollow core extending longitudinally along the center of the length of the HCF; illuminating the antiresonant HCF using the at least one light source; detecting a plurality of micrographs at the plurality of angles using the at least one optical microscope, wherein each micrograph comprises a striped pattern caused by light transmitted through the antiresonant HCF from the light source; constructing a sinogram from the plurality of micrographs using computed tomography, wherein the sinogram comprises a first axis defined by the angle around the circumference of the antiresonant HCF and a second axis defined by a cross-sectional distance defined by the antiresonant HCF, wherein the sinogram comprises a repeating pattern in the direction of the first axis; and determining the dimensions of the internal structure of the antiresonant HCF using the repeating pattern in the direction of the first axis of the sinogram.
Clause B. The method of clause A, wherein the repeating pattern of the sinogram comprises: a first pair of bright lines parallel to the first axis positioned towards the minimum and maximum extremes of the second axis of the sinogram; a second pair of bright lines parallel to the first axis positioned inside of the first pair of bright lines on the second axis, wherein the bright lines indicate relatively high pixel intensity compared to other areas of the sinogram; a pair of columns comprising a first pattern positioned inside the second pair of bright lines on the second axis; and a central column comprising a second pattern positioned inside the pair of columns comprising the first pattern wherein the second pattern is different to the first pattern.
Clause C. The method of clause B, wherein determining the dimensions of the internal structure of the antiresonant HCF comprises: determining an outer diameter of the outer tubular cladding of the antiresonant hollow core fiber using the distance between the first pair of bright lines.
Clause D. The method of clause B or clause C, wherein determining the dimensions of the internal structure of the antiresonant HCF comprises: determining an inner diameter of the tubular cladding of the antiresonant hollow core fiber using the distance between the second pair of bright lines.
Clause E. The method of any of clauses B to D, wherein determining the dimensions of the internal structure of the antiresonant HCF comprises: determining a diameter of the hollow core using the distance between boundaries between the pair of columns comprising the first pattern and the column comprising the second pattern.
Clause F. The method of any of clauses B to E, wherein determining the dimensions of the internal structure of the antiresonant HCF comprises: detecting a series of pairs of diagonal dark lines spatially displaced parallel to the first axis and entirely contained within the central column comprising the second pattern, wherein the dark lines indicate relatively low pixel intensity compared to other areas of the sinogram; and in response to detecting a series of pairs of diagonal dark line, determining a spacing between pairs of tubular capillaries of the plurality of tubular capillaries using the distance between a pair of diagonal dark lines of the series of pairs of diagonal dark lines spatially displaced parallel to the first axis.
Clause G. The method of clause F, further comprising: determining an absence of at least one pair of diagonal dark lines of the series of displaced pairs of diagonal dark lines, wherein the number of pairs of diagonal lines present in the series of dark diagonal lines equals the number of tubular capillaries attached to the inner surface of the tubular cladding; and in response to determining an absence of at least one pair of diagonal dark lines, identifying contact between at least two of the plurality of tubular capillaries.
Clause H. The method of any of clauses A to G, wherein positioning the at least one light source and at least one optical microscope on opposing sides of a longitudinal section of an antiresonant HCF at a plurality of angles around a circumference of the antiresonant HCF comprises: positioning a plurality of optical microscopes around the circumference of the antiresonant HCF at the plurality of angles.
Clause I. The method of clause H, further comprising: positioning at least two layers of the plurality optical microscopes around the circumference of the antiresonant HCF and displaced along the longitudinal length of the antiresonant HCF.
Clause J. The method of any of clauses A to I, wherein positioning the at least one light source and at least one optical microscope on opposing sides of a longitudinal section of an antiresonant HCF at a plurality of angles around a circumference of the antiresonant HCF, further comprises: rotating the antiresonant HCF relative to one or more optical microscopes positioned around the circumference of the antiresonant HCF.
Clause K. The method of any of clauses A to J, wherein positioning at least one light source and at least one optical microscope on opposing sides of a longitudinal section of an antiresonant HCF at a plurality of angles around a circumference of the antiresonant HCF, further comprises: positioning the at least one light source and at least one optical microscope downstream from a draw furnace in a draw tower; and wherein detecting the plurality of micrographs is performed as the antiresonant HCF is being drawn from the draw furnace.
Clause L. The method of any of clauses A to K, wherein the antiresonant HCF is a double nested nodeless antiresonant HCF comprising a set of tubular capillaries arranged on an inside surface of the tubular outer cladding at an azimuthal location, wherein the set of tubular capillaries comprises an outer nested capillary, a middle nested capillary, and an inner nested capillary, wherein the middle nested capillary is nested within the outer nested capillary and the inner nested capillary is nested within the middle nested capillary.
Clause M. The method of any of clauses A to L, further comprising: receiving spectral data collected with an interferometric device, wherein the interferometric device is configured to project light towards the antiresonant HCF and detect a signal comprising a spectrum comprising at least one peak corresponding to a diameter value of one the plurality of tubular capillaries, wherein the spectrum is derived from an interference pattern caused by the projected light reflected by the antiresonant HCF, wherein the light reflected by the antiresonant HCF comprises light exiting at least one of the plurality of tubular capillaries; and determining a diameter value of the tubular capillary using a position of the peak in the spectrum.
Clause N. The method of clause M, wherein the spectrum is derived from the interference pattern by: applying an inverse Fourier transform to the interference pattern to generate a spectrum comprising a plurality of peaks representing time delay values of and an interference between the light exiting the plurality of tubular capillaries compared to a time reference, wherein the time reference is a time of an optical path of the light reflected towards a collection fiber from an interface at the inner surface of the outer cladding; and converting the time delay values in the spectrum into diameter values.
Clause O. A system for monitoring the internal structure of an antiresonant hollow core fiber, HCF, wherein the antiresonant HCF comprises an outer tubular cladding and an internal structure comprising a plurality of tubular capillaries extending longitudinally along the length of the HCF which are attached to the inner surface of the tubular cladding, wherein the plurality of tubular capillaries define a hollow core extending longitudinally along the center of the length of the HCF, the system comprising: at least one light source; at least one optical microscope, wherein the at least one light source and the at least one optical microscope are positioned on opposing sides of the antiresonant HCF, and wherein the at least one light source and the at least one optical microscope are positionable at a plurality of angles around a circumference of the antiresonant HCF; and a microstructure measuring system connected to the at least one light source and the at least one optical microscope, the microstructure measuring system configured to: illuminate the antiresonant HCF using the at least one light source; detect a plurality of micrographs at the plurality of angles using the at least one optical microscope, wherein each micrograph comprises a striped pattern caused by light transmitted through the antiresonant HCF from the light source; construct a sinogram from the plurality of micrographs using computed tomography, wherein the sinogram comprises a first axis defined by the angle around the circumference of the antiresonant HCF and a second axis defined by a cross-sectional distance defined by the antiresonant HCF, wherein the sinogram comprises a repeating pattern in the direction of the first axis; and determining the dimensions of the internal structure of the antiresonant HCF using the repeating pattern of the sinogram.
Clause P. The system of clause O wherein the at least one light source is a plurality of light source-optical microscope pairs, and the plurality of optical microscope-light source pairs are positioned around the circumference of the antiresonant HCF at the plurality of angles.
Clause Q. The system of clause P, wherein at least two layers of the plurality of optical microscope-light source pairs are positioned around the circumference of the antiresonant HCF, where the at least two layers are displaced along the longitudinal length of the antiresonant HCF.
Clause R. The system of any of clauses O to Q, further comprising: an interferometric device configured to project light towards the antiresonant HCF and detect a signal comprising a spectrum comprising at least one peak corresponding to a diameter value of one the plurality of tubular capillaries, wherein the spectrum is derived from an interference pattern caused by the projected light reflected by the antiresonant HCF, wherein the light reflected by the antiresonant HCF comprises light exiting the plurality of tubular capillaries; and wherein the microstructure measuring system is further configured to determine a diameter value of the tubular capillary using a position of the peak in the spectrum.
Clause S. The system of any of clauses O to R, wherein the repeating pattern of the sinogram comprises: a first pair of bright lines parallel to the first axis positioned towards the minimum and maximum extremes of the second axis of the sinogram; a second pair of bright lines parallel to the first axis positioned inside of the first pair of bright lines on the second axis; a pair of columns comprising a first pattern positioned inside the second pair of bright lines on the second axis; and a central column comprising a second pattern positioned inside the pair of columns comprising the first pattern wherein the second pattern is different to the first pattern.
Clause T. Use of the system of clauses O to S in a draw tower, wherein the at least one light source and the at least one optical microscope are positioned downstream from a draw furnace in the draw tower, and the microstructure measuring system is configured to detect the plurality of micrographs as the antiresonant HCF is being drawn from the draw furnace.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method (1100) for monitoring the internal structure of an antiresonant hollow core fiber, HCF, (100) the method comprising:
positioning (1102) at least one light source (202) and at least one optical microscope (402) on opposing sides of a longitudinal section of an antiresonant HCF at a plurality of angles around a circumference of the antiresonant HCF, wherein the antiresonant HCF comprises an outer tubular cladding (102) and an internal structure comprising a plurality of tubular capillaries (104) extending longitudinally along the length of the HCF which are attached to the inner surface of the tubular cladding, wherein the plurality of tubular capillaries define a hollow core (106) extending longitudinally along the center of the length of the HCF;
illuminating (1104) the antiresonant HCF using the at least one light source (202);
detecting (1106) a plurality of micrographs (206) at the plurality of angles using the at least one optical microscope, wherein each micrograph comprises a striped pattern caused by light transmitted through the antiresonant HCF from the light source;
constructing (1108) a sinogram (406) from the plurality of micrographs (206) using computed tomography, wherein the sinogram (406) comprises a first axis defined by the angle around the circumference of the antiresonant HCF and a second axis defined by a cross-sectional distance defined by the antiresonant HCF, wherein the sinogram comprises a repeating pattern in the direction of the first axis; and
determining (1110) the dimensions of the internal structure of the antiresonant HCF using the repeating pattern in the direction of the first axis of the sinogram (406).

2. The method of claim 1, wherein the repeating pattern of the sinogram comprises:
a first pair of bright lines parallel to the first axis positioned towards the minimum and maximum extremes of the second axis of the sinogram, wherein the bright lines indicate relatively high pixel intensity compared to other areas of the sinogram;
a second pair of bright lines parallel to the first axis positioned inside of the first pair of bright lines on the second axis;
a pair of columns comprising a first pattern positioned inside the second pair of bright lines on the second axis; and
a central column comprising a second pattern positioned inside the pair of columns comprising the first pattern wherein the second pattern is different to the first pattern.

3. The method of claim 2, wherein determining the dimensions of the internal structure of the antiresonant HCF comprises:
determining an outer diameter of the outer tubular cladding of the antiresonant hollow core fiber using the distance between the first pair of bright lines.

4. The method of claim 2 or claim 3, wherein determining the dimensions of the internal structure of the antiresonant HCF comprises:
determining an inner diameter of the tubular cladding of the antiresonant hollow core fiber using the distance between the second pair of bright lines.

5. The method of any of claims 2 to 4, wherein determining the dimensions of the internal structure of the antiresonant HCF comprises:
determining a diameter of the hollow core using the distance between boundaries between the pair of columns comprising the first pattern and the column comprising the second pattern.

6. The method of any of claims 2 to 5, wherein determining the dimensions of the internal structure of the antiresonant HCF comprises:
detecting a series of pairs of diagonal dark lines spatially displaced parallel to the first axis and entirely contained within the central column comprising the second pattern, wherein the dark lines indicate relatively low pixel intensity compared to other areas of the sinogram; and
in response to detecting a series of pairs of diagonal dark lines, determining a spacing between pairs of tubular capillaries of the plurality of tubular capillaries using the distance between a pair of diagonal dark lines of the series of pairs of diagonal dark lines spatially displaced parallel to the first axis.

7. The method of claim 6, further comprising:
determining an absence of at least one pair of diagonal dark lines of the series of displaced pairs of diagonal dark lines, wherein the number of pairs of diagonal lines present in the series of dark diagonal lines equals the number of tubular capillaries attached to the inner surface of the tubular cladding; and
in response to determining an absence of at least one pair of diagonal dark lines, identifying contact between at least two of the plurality of tubular capillaries.

8. The method of any preceding claim, wherein positioning the at least one light source and at least one optical microscope on opposing sides of a longitudinal section of an antiresonant HCF at a plurality of angles around a circumference of the antiresonant HCF comprises:
positioning a plurality of optical microscopes around the circumference of the antiresonant HCF at the plurality of angles.

9. The method of claim 8, further comprising:
positioning at least two layers of the plurality optical microscopes around the circumference of the antiresonant HCF and displaced along the longitudinal length of the antiresonant HCF.

10. The method of any preceding claim, wherein positioning the at least one light source and at least one optical microscope on opposing sides of a longitudinal section of an antiresonant HCF at a plurality of angles around a circumference of the antiresonant HCF, further comprises:
rotating the antiresonant HCF relative to one or more optical microscopes positioned around the circumference of the antiresonant HCF.

11. The method of any preceding claim, wherein positioning at least one light source and at least one optical microscope on opposing sides of a longitudinal section of an antiresonant HCF at a plurality of angles around a circumference of the antiresonant HCF, further comprises:
positioning the at least one light source and at least one optical microscope downstream from a draw furnace in a draw tower; and
wherein detecting the plurality of micrographs is performed as the antiresonant HCF is being drawn from the draw furnace.

12. The method of any preceding claim, wherein the antiresonant HCF is a double nested nodeless antiresonant HCF comprising a set of tubular capillaries arranged on an inside surface of the tubular outer cladding at an azimuthal location, wherein the set of tubular capillaries comprises an outer nested capillary, a middle nested capillary, and an inner nested capillary, wherein the middle nested capillary is nested within the outer nested capillary and the inner nested capillary is nested within the middle nested capillary.

13. The method of any preceding claim, further comprising:
receiving spectral data collected with an interferometric device, wherein the interferometric device is configured to project light towards the antiresonant HCF and detect a signal comprising a spectrum comprising at least one peak corresponding to a diameter value of one the plurality of tubular capillaries, wherein the spectrum is derived from an interference pattern caused by the projected light reflected by the antiresonant HCF, wherein the light reflected by the antiresonant HCF comprises light exiting at least one of the plurality of tubular capillaries; and
determining a diameter value of the tubular capillary using a position of the peak in the spectrum.

14. A system for monitoring the internal structure of an antiresonant hollow core fiber, HCF, (100) wherein the antiresonant HCF comprises an outer tubular cladding (102) and an internal structure comprising a plurality of tubular capillaries (104) extending longitudinally along the length of the HCF which are attached to the inner surface of the tubular cladding, wherein the plurality of tubular capillaries define a hollow core (106) extending longitudinally along the center of the length of the HCF, the system comprising:
at least one light source (202);
at least one optical microscope (402), wherein the at least one light source and the at least one optical microscope are positioned on opposing sides of the antiresonant HCF, and wherein the at least one light source and the at least one optical microscope are positionable at a plurality of angles around a circumference of the antiresonant HCF (100); and
a microstructure measuring system (404) connected to the at least one light source and the at least one optical microscope, the microstructure measuring system configured to:
illuminate the antiresonant HCF using the at least one light source (202);
detect a plurality of micrographs (206) at the plurality of angles using the at least one optical microscope (402), wherein each micrograph comprises a striped pattern caused by light transmitted through the antiresonant HCF from the light source;
construct a sinogram (406) from the plurality of micrographs (202) using computed tomography, wherein the sinogram (406) comprises a first axis defined by the angle around the circumference of the antiresonant HCF and a second axis defined by a cross-sectional distance defined by the antiresonant HCF, wherein the sinogram comprises a repeating pattern in the direction of the first axis; and
determining the dimensions of the internal structure of the antiresonant HCF (100) using the repeating pattern of the sinogram (406).

15. Use of the system of claim 14 in a draw tower (1700), wherein the at least one light source (202) and the at least one optical microscope (402) are positioned downstream from a draw furnace (1708) in the draw tower (1700), and the microstructure measuring system is configured to detect the plurality of micrographs as the antiresonant HCF is being drawn from the draw furnace.
